# EUROPEAN PATENT SPECIFICATION

(11) **EP 1 875 539 B1**
(45) Date of publication and mention of the grant of the patent: **26.10.2011**
(21) Application number: 05821967.6
(22) Date of filing: 15.12.2005
(51) Int. Cl.: H01M 4/86, H01M 4/88, H01M 8/12

(54) **METHOD FOR FABRICATING A MICRO-SIZED ELECTRODE FOR SOLID OXIDE FUEL CELL**
HERSTELLUNGSVERFAHREN EINER MIKROGRÖSSEN-ELEKTRODE FÜR EINE FESTOXID-BRENNSTOFFZELLE
PROCEDE DE FABRICATION D'UNE ELECTRODE MICROMETRIQUE POUR PILE A COMBUSTIBLE A OXYDE SOLIDE

(30) Priority: 22.04.2005 KR 20050033755
(43) Date of publication of application: 09.01.2008
(73) Proprietor: Korea Institute of Science and Technology, Seoul 136-791 (KR)
(72) Inventor: KIM, Joo sun, Gyeonggi-do 411-730 (KR); LEE, Hae Weon, Seoul 130-781 (KR); LEE, Jong Ho, Gwangjin-gu, Seoul 143-754 (KR); KIM, Gyeung Ho, Seoul 136-791 (KR); KIM, Sang Woo, Seoul 136-120 (KR); KIM, Hyoung Chul, Seoul 136-075 (KR); CHOI, Sun Hee, Suseong-gu, Daegu 706-779 (KR)
(74) Representative: Ketelaars, Maarten F.J.M.
(86) International application number: PCT/KR2005/004326
(87) International publication number: WO 2006/112583

(56) References cited:
- WO-A2-01/95407
- WO-A2-02/45198
- US-A1- 2004 115 507
- US-A1- 2004 214 080
- KOEP E ET AL: "A photolithographic process for investigation of electrode reaction sites in solid oxide fuel cells" SOLID STATE IONICS, NORTH HOLLAND PUB. COMPANY. AMSTERDAM; NL, NL LNKD- DOI:10.1016/J.SSI.2004.07.012, vol. 176, no. 1-2, 14 January 2005 (2005-01-14), pages 1-8, XP025254959 ISSN: 0167-2738 [retrieved on 2005-01-14]
- FLEIG J ET AL: "Electrodes and electrolytes in micro-SOFCs: a discussion of geometrical constraints" SOLID STATE IONICS, NORTH HOLLAND PUB. COMPANY. AMSTERDAM; NL, NL LNKD- DOI:10.1016/J.SSI.2004.07.035, vol. 174, no. 1-4, 29 October 2004 (2004-10-29), pages 261-270, XP004663572 ISSN: 0167-2738
- CHEN X ET AL: "Thin-film heterostructure solid oxide fuel cells" APPLIED PHYSICS LETTERS, AIP, AMERICAN INSTITUTE OF PHYSICS, MELVILLE, NY, US LNKD- DOI:10.1063/1.1697623, vol. 84, no. 14, 5 April 2004 (2004-04-05) , pages 2700-2702, XP012061041 ISSN: 0003-6951

## Description

### TECHNICAL FIELD

The present invention relates to a micro-sized electrode for a solid oxide fuel cell (SOFC) capable of being applied as a power source of a microminiaturized component such as a mobile phone or a notebook and a portable communication device.

### BACKGROUND ART

A fuel cell is a device using an electrochemical reaction between an oxidizer and a fuel without a process for converting chemical energy of the fuel into thermal or mechanical energy. Therefore, the fuel cell has more excellent efficiency and environment protection characteristic than the conventional one, and many researches are being performed as future power.

A portable electronic device such as a mobile phone or a notebook requires power corresponding to approximately 0.5∼20W. Accordingly, a micro-sized fuel cell to be used as a power source of the system is differentiated from a large fuel cell for generating power corresponding to approximately 10∼250KW. The conventional technique for a large fuel cell is not suitable for a micro-sized fuel cell for a portable electronic device. Many efforts to develop a micro-sized fuel cell do not result in deriving a new technique to be practicable or commercialized.

The fuel cell can be divided into a phosphoric acid fuel cell (PAFC), a polymer electrolyte membrane fuel cell (PEMFC), a molten carbonate fuel cell (MCFC), a solid oxide fuel cell (SOFC), etc. according to an electrolyte to be used. The PEMFC is operated at a temperature of approximately 80°C, the PAFC is operated at a temperature of approximately 200°C, the MCFC is operated at a temperature of approximately 650°C, and the SOFC is operated at a temperature of approximately 800°C. Among the fuel cells, the SOFC formed of solid ceramic and metal has the most excellent efficiency and various fuels. Also, since the SOFC can utilize waste heat, it is applicable to a home fuel cell of 1∼5KW and cogeneration with a gas turbine more than 200KW.

A single chamber solid oxide fuel cell (SC-SOFC) is operated as follows. An anode and a cathode are alternately disposed at one surface of an electrolyte, or the anode and the cathode are separately disposed at both surfaces of the electrolyte. In the two cases, hydrocarbon, fuel gas of a fuel cell is mixed with air, oxidation gas, and then the mixed gas is injected into the system. Since a metal element such as Ni, Pd, Ru, etc. is added to a ceria-based oxide to which a rare earth element is doped, a reaction of the injected hydrocarbon is accelerated. In the fuel cell, electricity is generated by an oxidation reaction of hydrogen and carbon monoxide and a deoxidation reaction of oxygen. The cathode and the anode have to be formed of an excellent material for a selective catalytic reaction with mixed gas. Also, a low temperature ion conductivity of an electrolyte material has to be obtained for an operation in a low temperature.

In the SC-SOFC that both the cathode and the anode are exposed to mixed gas between a fuel and air, it is more difficult to obtain a thermal or mechanical stability and a function than the conventional fuel cell. The Japanese Hibino has disclosed a single chamber solid oxide fuel cell (SC-SOFC) formed of a nickel-based anode and a perovskite cathode in which yttria-stabilized zirconia (YSZ) is used as a solid electrolyte. However, the SC-SOFC has to be operated at a high temperature of approximately 950°C in order to obtain a sufficient ion conductivity in a solid electrolyte. Later, the SC-SOFC has been researched to be used as a small power supplying device and to be operated at a low temperature with a high output. Recently, many researchers including Hibino have reported that a fuel cell can be operated in a low temperature of approximately 500°C by using a less amount of ceria-based electrolyte and palladium catalyst with a higher output.

According to a simulation, a fabrication of an SOFC having a large aspect ratio for a high output to implement utility and a high integration of an electrode are required. Therefore, it is not proper to apply the conventional method for fabricating an electrode such as a screen printing method and a thin film technique including a sputtering method or an electron beam deposition method to a method for fabricating the SC-SOFC. The screen printing method has a limitation in fabricating a micro-sized electrode. Also, the thin film technique has a degraded degree of freedom, and has a difficulty in controlling a porous characteristic, the most representative characteristic of the electrode for SOFC.

In order to fabricate an SC-SOFC to be used as a portable power supplying device, technique for controlling a porous characteristic, a shape, etc. of an electrode and fabricating a sub-micrometer sized electrode by arranging it on a ceramic substrate is necessary.

### DISCLOSURE OF THE INVENTION

Therefore, an object of the present invention is to provide a micro-sized or a sub-micro sized electrode for a solid oxide fuel cell (SOFC) having a high precision and a high efficiency.

Another object of the present invention is to provide a small SOFC having an excellent mobility by using the micro-sized electrode or the sub-micro sized electrode.

To achieve these in accordance with the purpose of the present invention, there is provided a method for fabricating the electrode pattern for a solid oxide fuel cell (SOFC), comprising: preparing a substrate including an electrolyte layer; forming a first photoresist mold for a first electrode pattern on an upper surface of the substrate; preparing a first paste including a first electrode powder; coating the first paste on the substrate and then forming a first electrode pattern by using the first photoresist mold; removing the first photoresist mold; forming a second photoresist mold for a second electrode pattern on the upper surface of the substrate; preparing a second paste including a second electrode powder; coating the second paste on the substrate and then forming a second electrode pattern by using the second photoresist mold; and removing the second photoresist mold.

The substrate is selected from a group including SiO₂, Si₃N₄, Al₂O₃, MgO, TiO₂, ZrO₂, and materials that a dopant is added to each of the above materials. In case that the substrate is formed of a silicon wafer, etc., an additional insulation and thermal expansion buffer layer can be formed on an upper surface of the substrate.

The insulation and the thermal expansion buffer layer is selected from a group including SiO₂, Si₃N₄, Al₂O₃, MgO, TiO₂, ZrO₂, and materials that a dopant is added to each of the above materials.

As the substrate, a ceria-based, lanthanium gallate-based, or ZrO₂-based ceramic electrolyte substrate can be used.

Preferably, the first paste and the second paste have a viscosity of 4000-5000 cps.

The photoresist mold can be removed by a chemical decomposition using a ketone-based solvent or a furan-based solvent, a thermal decomposition at a temperature of 300∼800°C, or a combination there between.

The method for fabricating an electrode pattern further comprises simultaneously or sequentially firing the first electrode pattern and the second electrode pattern.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIGS. 1 to 7 are views showing a processing for fabricating a solid oxide fuel cell (SOFC) according to the present invention;
FIG. 8 is a flow chart showing a processing for fabricating an optimized paste by a photoresist molding method according to the present invention;
FIG. 9 is a photo of a scanning electron microscope (SEM) of a cathode and an anode of an electrode having a width of 20µm according to the present invention;
FIG. 10 is a photo of a scanning electron microscope (SEM) of the anode of an electrode having a width of 20µm according to the present invention;
FIG. 11 is a photo of a scanning electron microscope (SEM) of the anode of an electrode having a width of 20µm according to the present invention;
FIG. 12 is a photo showing an SOFC of 10 x 10 mm² having an electrode of a width of 20µm according to the present invention; and
FIG. 13 is a view showing an output characteristic of an SOFC having an electrode of a width of 20µm operated at a temperature of 500°C according to the present invention.

### MODES FOR CARRYING OUT THE PREFERRED EMBODIMENTS

Reference will now be made in detail to the preferred embodiments of the present invention, examples of which are illustrated in the accompanying drawings.

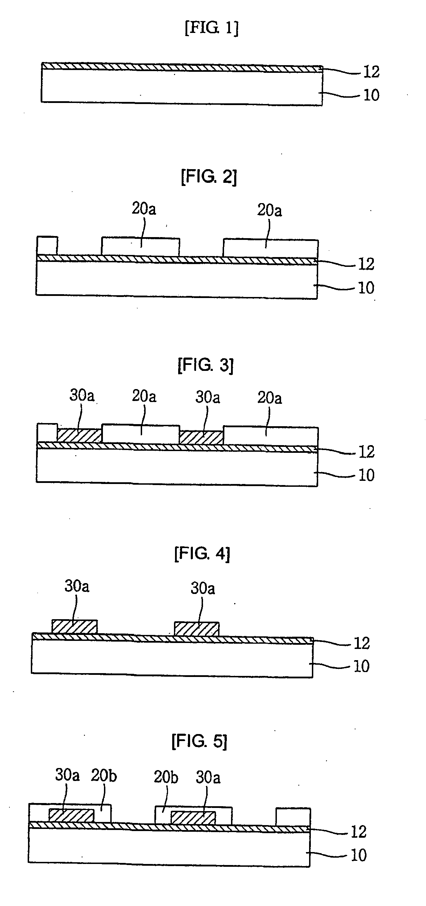

A method for fabricating a solid oxide fuel cell (SOFC) having a micro-sized electrode according to the present invention will be explained with reference to FIGS. 1 to 7.

First, an insulating substrate 10 that has been cleaned is prepared as a substrate. As the substrate, a substrate having an insulating layer on an upper surface thereof or an insulating substrate can be used.

As shown in FIG. 1, an electrolyte layer 12 is coated on the substrate by a film forming technique such as a sputtering method, an electron beam evaporation method, etc. In case that the substrate is formed of a ceramic electrolyte structure, the process for coating the electrolyte layer can be omitted. As the ceramic electrolyte structure, an electrolyte material that a rare earth element is doped to a ceria-based or ZrO₂-based ceramic is preferably used.

In case that the substrate is formed of a silicon wafer, an insulating layer such as Al₂O₃ is coated on the substrate with a sufficient thickness, and then the electrolyte layer 12 is formed. The Al₂O₃ layer serves as a buffer layer for buffering a thermal expansion difference between the silicon substrate and the electrolyte layer and an insulating layer for preventing electrical conductivity.

As shown in FIG. 2, the fabricated electrolyte substrate undergoes a photolithography process, thereby forming a first photoresist mold 20a having a desired size and shape. The photoresist mold is formed by coating a photoresist on the substrate, then exposing the photoresist to ultra-violet source with using a mask having a pattern, and then partially removing the photoresist.

As shown in FIG. 3, a first paste (or slurry) for a first electrode pattern having a viscosity of approximately 4000~5000cps is contained in the patterned photoresist mold, and is dried.

The technique for forming a photoresist pattern by using a photolithography and forming various thin film layers by using the photoresist pattern has been well known in a semiconductor fabricating field. It is very hard to obtain porous structure by using general thin film fabricating methods, but a micro-sized porous electrode can be formed by simple casting process in the present invention. Therefore, the present invention can anticipate an economical advantage, an enhanced productivity and material structures.

As shown in FIG. 4, the first photoresist mold 20a is removed by using a ketone-based solvent such as acetone or a tetrahydrofuran-based solvent. The photoresist mold can be removed by a thermal decomposition at a temperature of 300∼800°C, preferably at a temperature of 400∼600°C independently or combinationally with the solvent using method.

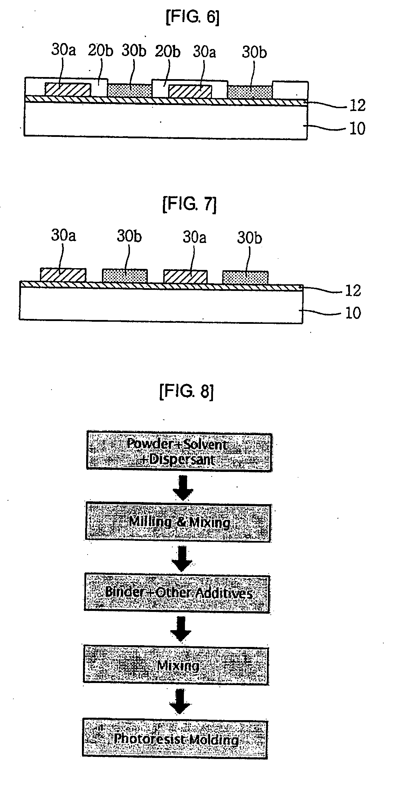

As shown in FIG. 5, a second photoresist mold 20b for a second electrode pattern is formed on an upper surface of the substrate where the first electrode pattern is formed. Then, as shown in FIG. 6, a second paste for a second electrode pattern is coated on the substrate, thereby forming a second electrode pattern. Finally, as shown in FIG. 7, the second photoresist mold 20b is removed, thereby completing a pair of electrodes for an SOFC in which the first electrode pattern and the second electrode pattern are alternately formed. The first electrode pattern and the second electrode pattern correspond to an anode and a cathode of a unit fuel cell, respectively.

Since each mold is fabricated to have a micro-size or a sub-micro size by a photolithography process, a fabricated electrode pattern has a width and an electrode gap of a micro-size or a sub-micro size.

In the step of forming each electrode pattern, a firing process can be independently performed at each step for fabricating each electrode, or can be performed at one time after each electrode is fabricated according to a material and a desired characteristic of the electrode pattern. A firing temperature and a temperature control form for each electrode can be various according to an electrode structure.

FIG. 8 is a flow chart showing a processing for fabricating an optimized paste by a photoresist molding method according to the present invention.

Referring to FIG. 8, electrode powder is put into a solvent such as α-terpineol or Manhattan fish oil, etc. Then, the electrode powder is mixed with the thermo-setting resin for approximately three hours by a planetary milling process, etc. Di-n-butyl phthalate (DBP) serving as a plasticizer and phenolic resin or polyurethane resin, a thermo-setting resin, serving as a bonding material are added to the paste, thereby performing a milling for approximately 12 hours. The solvent can include a copolymer dispersing agent (KD-1, KD-6, KD-7, etc) having poly vinyle pyrollidone and carboxyl-saturated hydrocarbon as a dispersing agent. As the plasticizer, not only the DBP but also a phthalate based plasticizer such as dioctyl phthalate (DOP) can be used.

As one example of a composition ratio of the paste, the solvent α-terpineol having a weight ratio of 20∼50% to the electrode powder, the dispersing agent KD-1 having a weight ratio of 1∼5%, the plasticizer DBP having a weight ratio of 3∼10%, and the bonding material, phenolic resin having a weight ratio of 5∼15% were combined to one another. The fabricated paste has a viscosity of 4000-5000 cps thus to be easily contained or removed in/from the photoresist mold, thereby facilitating a processing and enhancing a reliability.

The electrode pattern formed by a photoresist molding process, that is, a green body requires solvent resistance and a low temperature hardening. That is, when the photoresist pattern (photoresist mold) fabricated by a photolithography process is removed by a remover such as acetone, the fabricated electrode pattern has to be endurable in the solution. Also, the electrode pattern has to be hardened at a low temperature less than 100°C in order to prevent a thermal degradation of photoresist mold. Therefore, a bonding material such as a thermoplastic resin, PVB, ethylcellose, etc. that has been used to prepare the conventional pastes for SOFC electrolyte and electrodes is not proper in the present invention.

In the present invention, phenolic resin was used, and a thermo-setting resin having an excellent solution resistance such as polyurethane, epoxy resin, and amino resin can be used.

In the present invention, an SC-SOFC having an electrode of a micro-sized width was fabricated, and the SC-SOFC was fabricated to be porous so that an anode and a cathode thereof can have proper porosity. The porous electrode can be fabricated by a combination of several techniques, especially, by a change of a solid loading of an electrode paste, by a densification difference according to a thermal processing temperature, and by a usage of a pore forming material such as a binder or a carbon-based material. In the present invention, the porous electrode was fabricated by controlling the solid loading change of an electrode paste and the thermal processing temperature.

In the present invention, the photoresist mold serves not only as a mold but also as a masking layer. Therefore, a short between two electrodes, the largest problem generated at the time of fabricating adjacent electrodes can be solved. Accordingly, in the present invention, a miniaturized SC-SOFC having more excellent portability and integration than the conventional SOFC can be fabricated by technique for fabricating a micro-sized or sub-micro sized electrode. The technique can be applied to fabricate a miniaturized gas sensor having a large reaction characteristic.

### embodiment

First, 99.5% of an alumina wafer to be used as an insulating substrate is cleaned, and then Ce_{0.85}Sm_{0.15}O_{1.925} (Samarium-doped Ceria; SDC) or Ce_{0.9}Gd_{0.1}O_{1.95} (Gadolinium doped Ceria; GDC) to be used as an electrolyte was coated on the substrate by a reactive magnetron sputtering method.

In order to prevent an oxidation layer from being formed on a surface of Gd or Ce at the time of the electrolyte deposition, a pre-sputtering etching was performed for 20 minutes by applying a direct current of 200W to the cerium and by applying a direct current of 25W to the gadolinium in an atmosphere of pure argon.

After performing the pre-sputtering etching, a reactive sputtering was performed under a state that a gas pressure of 1mTorr is maintained and oxygen is provided. Herein, the substrate has an ordinary temperature. The fabricated electrolyte substrate underwent a series of photolithography processes, thereby forming a pattern having a desired sized and shape. The patterned photoresist serves as a mold of an electrode.

A paste for an anode (or a slurry) having a viscosity of approximately 4000cps was contained in the patterned photoresist, thereby forming an electrode. The substrate in which the paste was contained was put into a convection oven of 70°C, and then was dried by removing a volatile solvent from the paste. Then, the substrate was dried for 5 hours in a convection oven of 100°C, thereby forming a green body having a sufficient mechanical intensity.

The photoresist mold was dissolved by acetone for approximately 30 seconds thus to be removed.

Then, the anode was fired. A photolithography process was performed on the fired anode pattern, and a cathode paste was molded by the same manner as the aforementioned manner thereby to form a cathode.

As a material of the anode, NiO-GDC that NiO having a weight ratio of 61% is mixed to Ce_{0.9}Gd_{0.1}O₁.₉₅ (Gadolinium doped Ceria; GDC) was used. Also, as a material of the anode, Sm_{0.5}Sr_{0.5}CoO₃ (Samarium Strontium co-doped Cobaltite : SSC) was used. The anode was fired for 4 hours at a temperature of 1100°C, and the cathode was fired for 2 hours at a temperature of 950°C.

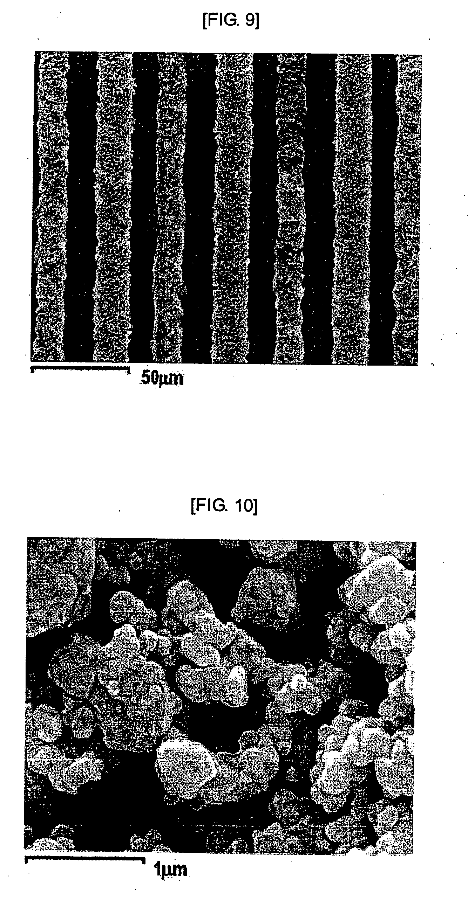

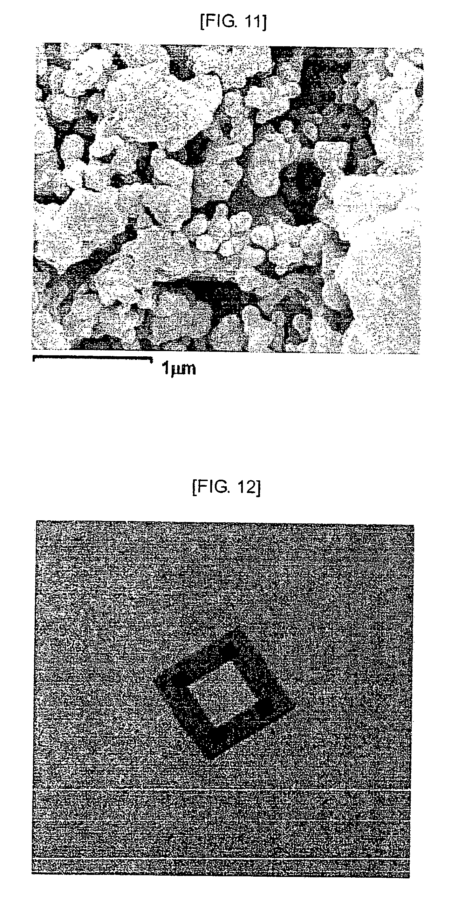

FIG. 9 to 12 are photos showing a scanning electron microscope (SEM) of an SC-SOFC having an electrode width of 20µm and an entire cell according to the present invention, FIG. 10 is a photo showing an anode formed of NiO-GDC, and FIG. 11 is a photo showing a cathode formed of SSC by a high magnification.

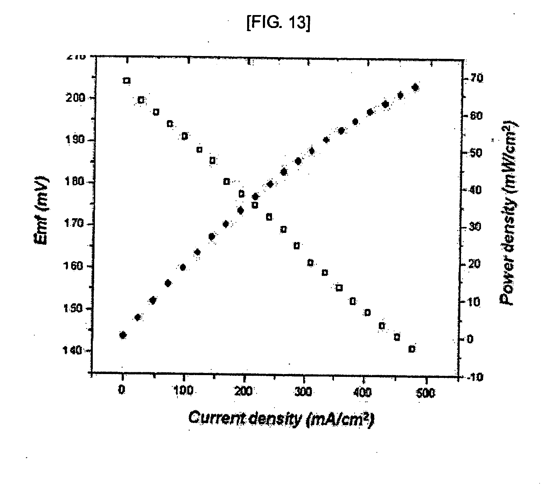

The fabricated SOFC was connected to a measuring system by connecting four Au pads of the anodes and the cathodes to the measuring system by a wire. An open current voltage (OCV) and an output voltage during operation of the fuel cell were measured by using a voltmeter, thereby obtaining a current-voltage output characteristic of the fuel cell. CH₄ 90sccm was used as fuel gas, and air of 90 sccm was used as oxidant gas. The fuel cell was deoxidized until the OCV thereof became approximately 205mV, and a current density thereof was measured. Referring to FIG. 13, the SC-SOFC fabricated in the present invention showed an output of 67mW/cm² at a temperature of 500°C.

In the present invention, an electrode having a micro-sized or sub-micro sized width is simply fabricated with a high precision without a ceramic etching process or an additional machining process, thereby having an excellent productivity, re-productivity, and applicability. Accordingly, a miniaturized SOFC having a high function can be fabricated, a high integration and a super-miniaturization of the SOFC can be implemented, a fabrication cost can be lowered, and a productivity can be enhanced.

## Claims

1. A method for fabricating an electrode pattern for a solid oxide fuel cell (SOFC), comprising:
preparing a substrate including an electrolyte layer;
forming a first photoresist mold for a first electrode pattern on an upper surface of the substrate;
preparing a first paste including a first electrode powder;
coating the first paste on the substrate and then forming a first electrode pattern by using the first photoresist mold;
removing the first photoresist mold;
forming a second photoresist mold for a second electrode pattern on the upper surface of the substrate;
preparing a second paste including a second electrode powder;
coating the second paste on the substrate and then forming a second electrode pattern by using the second photoresist mold; and
removing the second photoresist mold.

2. The method of claim 1, wherein the substrate is selected from a group including SiO₂, Si₃N₄, Al₂O₃, MgO, TiO₂, ZrO₂, and materials that a dopant is added to each of the materials.

3. The method of claim 1, wherein the substrate comprises an insulation and thermal expansion buffer layer on an upper surface thereof.

4. The method of claim 3, wherein the insulation and thermal expansion buffer layer is selected from a group including SiO₂, Si₃N₄, Al₂O₃, MgO, TiO₂, ZrO₂, and materials that a dopant is added to each of the above materials.

5. The method of claim 1, wherein the substrate is a ceria-based, lanthanium gallate-based, or ZrO₂-based ceramic electrolyte substrate.

6. The method of claim 1, wherein the first paste and the second paste comprise electrode powder, a solvent, a bonding material of a thermo-setting resin, a dispersing agent, and a plasticizer, and the thermo-setting resin is formed of at least one of a phenolic resin, an urethane resin, and an amino resin.

7. The method of claim 6, wherein the first paste and the second paste is a solvent including α-terpineol, the dispersing agent is a copolymer dispersing agent having poly vinyle pyrollidone and carboxyl-saturated hydrocarbon, and the plasticizer is a phthalate based plasticizer including one of di-n-butyl phthalate (DBP) and dioctyl phthalate (DOP).

8. The method of claim 7, wherein the first paste and the second paste have a viscosity of 4000-5000 cps.

9. The method of claim 1, wherein the photoresist mold is removed by a chemical decomposition using a ketone-based solvent or a furan-based solvent, a thermal decomposition at a temperature of 300∼800°C, or a combination therebetween.

10. The method of claim 1, further comprising firing the first electrode pattern and the second electrode pattern.

11. The method of claim 10, wherein the first electrode pattern and the second electrode pattern are simultaneously fired.

12. The method of claim 10, wherein the first electrode pattern and the second electrode pattern are sequentially fired.

## Patentansprüche

1. Verfahren zur Herstellung einer Elektrodenstruktur für eine Festoxidbrennstoffzelle (SOFC) umfassend:
Vorbereiten eines Substrats, das eine Elektrolytschicht beinhaltet;
Ausbilden einer ersten Fotolackform für eine erste Elektrodenstruktur auf einer oberen Fläche des Substrats;
Vorbereiten einer ersten Paste, die ein erstes Elektrodenpulver beinhaltet;
Beschichten der ersten Paste auf das Substrat und anschließendem Ausbilden einer ersten Elektrodenstruktur unter Verwendung der ersten Fotolackform;
Entfernen der ersten Fotolackform;
Ausbilden einer zweiten Fotolackform für eine zweite Elektrodenstruktur auf der oberen Fläche des Substrats;
Vorbereiten einer zweiten Paste, die ein zweites Elektrodenpulver beinhaltet;
Beschichten der zweiten Paste auf das Substrat und anschließendem Ausbilden einer zweiten Elektrodenstruktur unter Verwendung der zweiten Fotolackform; und
Entfernen der zweiten Fotolackform.

2. Verfahren gemäß Anspruch 1, wobei das Substrat aus einer Gruppe ausgewählt wird, die einschließt SiO₂, Si₃N₄, AL₂O₃, MgO, TiO₂, ZrO₂ und Materialien, zu denen jeweils ein Dotierungsmittel hinzugefügt ist.

3. Verfahren gemäß Anspruch 1, wobei das Substrat eine Isolations- und thermische Expansionspufferschicht auf einer oberen Substratfläche umfasst.

4. Verfahren gemäß Anspruch 3, wobei die Isolations- und thermische Expansionspufferschicht aus einer Gruppe ausgewählt ist, die einschließt SiO₂, Si₃N₄, AL₂O₃, MgO, TiO₂, ZrO₂ und Materialien, zu denen jeweils Dotierungsmittel hinzugefügt ist.

5. Verfahren gemäß Anspruch 1, wobei das Substrat ein Cerium(IV)oxid, Lanthangallat oder ZrO₂ basierendes Keramikelektrolytsubstrat ist.

6. Verfahren gemäß Anspruch 1, wobei die erste Paste und die zweite Paste ein Elektrodenpulver, ein Lösemittel, ein Bindematerial aus einem duroplastischen Harz, ein Dispersionsmittel, und einen Weichmacher umfassen, und das duroplastische Harz aus wenigstens einem der Harze Phenolharz, Urethanharz und Aminoharz ausgebildet ist.

7. Verfahren gemäß Anspruch 6, wobei die erste Paste und die zweite Paste ein Lösemittel enthaltendes α-Terpineol einschließt, das Dispersionsmittel ein Copolimer ist, das Dispersionsmittel Polyvinylpyrrolidon und carboxylgesättigte Hydrocarbone einschließt, und der Weichmacher ein phthalatbasierender Weichmacher ist, der entweder ein Di-n-butylphtalat (DBP) oder ein Dioctylphthalat (DOP) einschließt.

8. Verfahren gemäß Anspruch 7, wobei die erste Paste und die zweite Paste eine Viskosität von 4000-5000 cps haben.

9. Verfahren gemäß Anspruch 1, wobei die Fotolackform entfernt wird durch eine chemische Zerlegung unter Verwendung eines ketonbasierten Lösemittels oder eines furanbasierten Lösemittels, durch eine thermische Zerlegung bei einer Temperatur von 300-800°C, oder durch eine Kombination davon.

10. Verfahren gemäß Anspruch 1, das weiterhin das Brennen der ersten Elektrodenstruktur und der zweiten Elektrodenstruktur umfasst.

11. Verfahren gemäß Anspruch 10, wobei die erste Elektrodenstruktur und die zweite Elektrodenstruktur simultan gebrannt werden.

12. Verfahren gemäß Anspruch 10, wobei die erste Elektrodenstruktur und die zweite Elektrodenstruktur sequenziell gebrannt werden.

## Revendications

1. Procédé pour fabriquer un motif d'électrode pour une pile à combustible solide (SOFC), comprenant :
la préparation d'un substrat comprenant une couche d'électrolyte ;
la formation d'un premier moule de résine photosensible pour un premier motif d'électrode sur une surface supérieure du substrat ;
la préparation d'une première pâte comprenant une première poudre d'électrode ;
l'enduction de la première pâte sur le substrat et ensuite la formation d'un premier motif d'électrode en utilisant le premier moule de résine photosensible ;
le retrait du premier moule de résine photosensible ;
la formation d'un deuxième moule de résine photosensible pour un deuxième motif d'électrode sur la surface supérieure du substrat ;
la préparation d'une deuxième pâte comprenant une deuxième poudre d'électrode ;
l'enduction de la deuxième pâte sur le substrat et ensuite la formation d'un deuxième motif d'électrode en utilisant le deuxième moule de résine photosensible ; et
le retrait du deuxième moule de résine photosensible.

2. Procédé de la revendication 1, dans lequel le substrat est choisi dans un groupe constitué de SiO₂, Si₃N₄, Al₂O₃, MgO, TiO₂, ZrO₂, et des matériaux tels qu'un dopant est ajouté à chacun des matériaux.

3. Procédé de la revendication 1, dans lequel le substrat comprend une couche tampon d'isolation et d'expansion thermique sur une surface supérieure de celui-ci.

4. Procédé de la revendication 3, dans lequel la couche tampon d'isolation et d'expansion thermique est choisie dans un groupe constitué de SiO₂, Si₃N₄, Al₂O₃, MgO, TiO₂, ZrO₂, et des matériaux tels qu'un dopant est ajouté à chacun des matériaux.

5. Procédé de la revendication 1, dans lequel le substrat est un substrat d'électrolyte céramique à base d'oxyde de cérium, à base de gallate de lanthane, ou à base de ZrO₂.

6. Procédé de la revendication 1, dans lequel la première pâte et la deuxième pâte comprennent une poudre d'électrode, un solvant, un matériau de liaison d'une résine thermodurcissable, un agent dispersant, et un plastifiant, et la résine thermodurcissable est formée d'au moins une résine phénolique, une résine uréthane, et une résine amino.

7. Procédé de la revendication 6, dans lequel la première pâte et la deuxième pâte est un solvant comprenant le α-terpinéol, l'agent dispersant est un agent dispersant copolymère comprenant de la polyvinylpyrrolidone et un hydrocarbure saturé à carboxyle, et le plastifiant est un plastifiant à base de phtalate comprenant l'un parmi le phtalate de di-n-butyle (DBP) et le phtalate de dioctyle (DOP).

8. Procédé de la revendication 7, dans lequel la première pâte et la deuxième pâte ont une viscosité de 4000 à 5000 cps.

9. Procédé de la revendication 1, dans lequel le moule en résine photosensible est éliminé par une décomposition chimique en utilisant un solvant à base de cétone ou un solvant à base de furane, une décomposition thermique à une température de 300 à 800 °C, ou une combinaison de ceux-ci.

10. Procédé de la revendication 1, comprenant en outre la cuisson du premier motif d'électrode et du deuxième motif d'électrode.

11. Procédé de la revendication 10, dans lequel le premier motif d'électrode et le deuxième motif d'électrode sont cuits simultanément.

12. Procédé de la revendication 10, dans lequel le premier motif d'électrode et le deuxième motif d'électrode sont cuits séquentiellement.
